# EUROPÄISCHE PATENTSCHRIFT

(11) **EP 4 371 034 B1**
(45) Veröffentlichungstag und Bekanntmachung des Hinweises auf die Patenterteilung: **01.04.2026**
(21) Anmeldenummer: 22734509.7
(22) Anmeldetag: 02.06.2022
(51) Int. Cl.: G06N 3/09, G08G 1/16

(54) **VERFAHREN ZUM TRAINIEREN EINES TIEFEN NEURONALEN NETZES**
METHOD FOR TRAINING A DEEP NEURAL NETWORK
PROCÉDÉ DE FORMATION D'UN RÉSEAU NEURONAL PROFOND

(30) Priorität: 14.07.2021 DE 102021207505
(43) Veröffentlichungstag der Anmeldung: 22.05.2024
(73) Patentinhaber: Stellantis Auto SAS, 78300 Poissy (FR)
(72) Erfinder: BONARENS, Frank, 65428 Rüsselsheim am Main (DE); FEIFEL, Patrick, 65428 Rüsselsheim am Main (DE)
(74) Vertreter: ESIP
(86) Internationale Anmeldenummer: PCT/EP2022/065097
(87) Internationale Veröffentlichungsnummer: WO 2023/285027

(56) Entgegenhaltungen:
- JAKE SNELL ET AL: "Prototypical Networks for Few-shot Learning", 19 June 2017 (2017-06-19), XP055584971, Retrieved from the Internet <URL:https://arxiv.org/pdf/1703.05175.pdf> [retrieved on 20190502]
- FEIFEL PATRICK ET AL: "Reevaluating the Safety Impact of Inherent Interpretability on Deep Neural Networks for Pedestrian Detection", 2021 IEEE/CVF CONFERENCE ON COMPUTER VISION AND PATTERN RECOGNITION WORKSHOPS (CVPRW), IEEE, 19 June 2021 (2021-06-19), pages 29 - 37, XP033967421, DOI: 10.1109/CVPRW53098.2021.00012
- RAJA SEKHAR DHEEKONDA ET AL: "Object Detection from a Vehicle Using Deep Learning Network and Future Integration with Multi-Sensor Fusion Algorithm", SAE 2010 COMMERCIAL VEHICLE ENGINEERING CONGRESS SAE TECHNICAL PAPERS, vol. 1, 28 March 2017 (2017-03-28), US, XP055716567, ISSN: 0148-7191, DOI: 10.4271/2017-01-0117

## Beschreibung

### Technisches Gebiet

Die Erfindung betrifft ein Verfahren zum Trainieren eines tiefen neuronalen Netzes auf eine Objekterkennung. Die Erfindung betrifft ferner ein Computersystem zum Trainieren eines tiefen neuronales Netzes sowie ein trainiertes tiefes neuronales Netz und ein Steuergerät mit einem trainierten tiefen neuronalen Netz.

### Stand der Technik

Die Perzeption bzw. Modellierung eines Fahrzeugumfeldes stellt eine wesentliche Herausforderung bei einer Entwicklung von automatisierten Fahrfunktionen bzw. fortgeschrittenen Fahrerassistenzsysteme (engl. advanced driver assistance systems, ADAS) dar. Für eine Objekterkennung (engl. object detection), d.h. eine Klassifizierung (engl. classification) und Lokalisierung (engl. localisation) von sensorisch erfassten Objekten spielen tiefe neuronale Netze (engl. deep neural network, DNN) aufgrund ihrer hervorragenden Performanz eine entscheidende Rolle. So ist aus dem Aufsatz von Jake Snell et al: "Prototypical Networks for Few-shot Learning", 19. Juni 2017, arXiv.org, ist ein auf Prototypen basierendes neuronales Netz zur Klassifizierung bekannt, dessen Design auf die Verallgemeinerungsfähigkeit seines Klassifikators optimiert wurde.

Der Artikel von Patrick Feifel et al: "Reevaluating the Safety Impact of Inherent Interpretability on Deep Neural Networks for Pedestrian Detection", 2021 IEEE/CVF Conference on Computer Vision and Pattern Recognition Workshops (CVPRW), 19. Juni 2021 betrifft interpretierbares tiefes Neuronales Netz, dass eine nachvollziehbare Anforderungsanalyse zum Nachweis für eine sichere Funktionsweise einer Objekterkennung ermöglicht.

Ferner beschreibt der Artikel von Raja Sekhar Dheekonda et al: "Object Detection from a Vehicle Using Deep Learning Network and Future Integration with Multi-Sensor Fusion Algorithm", SAE International, 28. März 2017 ein Deep-Learning-Netzwerk zur Erkennung verschiedener Objekte in Kamerabildern.

Durch einen Trainingsalgorithmus und mit einer Anzahl von Trainingsiterationsschritten wird in den inneren Strukturen eines tiefen neuronalen Netzes ein Merkmalsraum gelernt, durch den die zu erkennenden Objekte repräsentiert werden können. Die Performanz sagt als Kriterium nichts darüber aus, wie eine DNN seinen Merkmalsraum anhand von vorgegenebnen Trainingsdaten in einer endlichen Anzahl von Trainingsiterationen lernt. Die inneren Strukturen eines DNN, die auch als verborgene oder latente Strukturen bezeichnet werden können, sind von außen betrachtet im Wesentlichen nicht nachvollziehbar. Somit wird im Entwicklungsprozess, d.h. während eines Trainings, von außen auch nicht klar, ob sich gelernte Repräsentationen in einem Bereich des Merkmalsraumes stabilisieren oder ob von Trainingsschritt zu Trainingsschritt vollkommen unterschiedliche Bereiche zur Repräsentation des Gelernten genutzt werden. Derzeit stehen zumindest keine geeigneten Verfahren zur Verfügung, die eine Evaluierung eines aktuellen Lernzustandes während eines Entwicklungsprozesses ermöglichen, was insbesondere für sicherheitskritischen Anwendungen essenziell ist, wie bei ADAS-Funktionen und auch beim automatisierten Fahren.

### Kurzbeschreibung der Erfindung

Vor diesem Hintergrund liegt der Erfindung die Aufgabe zugrunde, ein Verfahren zum Trainieren eines tiefen neuronalen Netzes bereitzustellen, das ein Überwachung (engl. monitoring) und/oder eine Steuerung eines Trainingsprozesses auf Basis einer Metrik ermöglicht, mit der eine qualitative Aussage über einen stabilen Lern- bzw. Trainingserfolg getroffen werden kann. Vorgeschlagen wird dementsprechend ein Verfahren nach Anspruch 1 sowie ein Computersystem nach Anspruch 4.

Weiterführende Ausgestaltungen sind Gegenstand der abhängigen Ansprüche. Gemäß einem ersten Aspekt der Erfindung wird die Aufgabe gelöst durch ein computerimplementiertes Verfahren zum Trainieren eines tiefen neuronalen Netzes auf eine Objekterkennung im Umfeld eines Kraftfahrzeuges.

Ein entsprechendes tiefes neuronales Netz (DNN) kann beispielsweise als Software implementiert in einem Steuergerät eines Kraftfahrzeuges eingebettet sein bzw. werden, wobei das Steuergerät während eines Fahrbetriebs Signale von einer Fahrzeugumfeldsensorik empfängt. Eine jeweilige Fahrzeugumfeldsensorik kann beispielsweise Kameras und/ oder Radar-, LIDAR-, Ultraschall sowie weitere geeignete Sensoren zur Abtastung des Fahrzeugumfeldes besitzen. Die von dem Steuergerät empfangenen Sensorsignale können entsprechen einer jeweiligen Abtastrate dem DNN als aktueller Bildeingangsdatensatz bereitgestellt werden.

Das tiefe neuronale Netz besitzt eine Anzahl von Merkmalsextrationsebenen und eine Anzahl von Perzeptionseben. Die Merkmalsextrationsebenen sind ausgebildet, für einen Bildeingangsdatensatz jeweils einen latenten Repräsentationsdatensatz zu erzeugen und an die Perzeptionsebenen weiterzugeben. Die Perzeptionsebenen sind ausgebildet, latente Repräsentationen mit einer Anzahl von gelernten Prototypen auf Ähnlichkeit hin zu vergleichen.

Ein tiefes neuronales Netz besitz im Allgemeinen neben einer Eingangsebene (engl. input layer) und einer Ausgabeebene (engl. output layer) eine Vielzahl von verborgenen Ebenen (engl. hidden layer), wobei jede Ebene eine Anzahl von Neuronen enthält. Die Neuronen in einer Ebene sind jeweils mit Neuronen benachbarter Ebenen (in der deutschen Literatur auch als Schichten bezeichnet) zumindest teilweise miteinander vernetzt. Gemäß der Architektur des vorliegenden DNN bilden die eingangsseitigen Ebenen eine Anzahl von Merkmalsextrationsebenen (engl. feature extraction layers), die ausgangseiteigen Ebenen bilden eine Anzahl von Perzeptionsebenen (engl. perception layers) des DNN.

Beim Erzeugen eines latenten Repräsentationsdatensatzes (engl. set of latent representations) wird durch die Merkmalsextrationsebenen aus einer Anzahl von Eingangsdaten eines am DNN-Eingang anliegenden Bildeingangsdatensatzes eine Anzahl latenter Repräsentationen erzeugt. Die Anzahl der erzeugten latenten Repräsentationen eines latenten Repräsentationsdatensatzes kann dabei kleiner sein, als die Anzahl der Eingangsdaten eines zugehörigen Bildeingangsdatensatzes. Die Merkmalsextrationsebenen können also hinsichtlich eine Datenreduktion bewirken. Während jedes Eingangsdatum jeweils auf einen Vektorraum mit einer Dimension entsprechend der Anzahl relevanter physikalischer Parameter abgebildet wird, bilden die erzeugten latente Repräsentation auf einen entsprechend höherdimensionalen Vektorraum ab, dem sogenannten latenten Raum (engl. latent space). Jede Dimension des latenten Raumes entspricht einem sogenannten Merkmal (engl. feature). In den Merkmalen jeder latenten Repräsentation stecken semantische Beziehungen, die aus den relevanten Eingangsdaten einer latenten Repräsentation von den Merkmalsextrationsebenen extrahiert worden sind.

Die Perzeptionsebenen des beispielhaften DNN umfassen eine Anzahl von Prototypen, die jeweils ebenso wie die von den Merkmalsextrationsebenen erzeugten latenten Repräsentationen durch einen Vektor im latenten Raum darstellbar sind. Insofern können alle latenten Repräsentationen eines erzeugten latenten Repräsentationsdatensatzes jeweils mit einer Anzahl von gelernten Prototypen verglichen werden.

Das tiefe neuronale Netz wird initialisiert und anschließend erfindungsgemäß mit einer Anzahl von Trainingszyklen trainiert, wobei mit jedem Trainingszyklus eine Anzahl aufeinanderfolgender Trainingsiterationsschritte und ein inkludierter darauffolgender Validierungsschritt durchlaufen wird. Dem tiefen neuronalen Netz wird in jedem Trainingsiterationsschritt eine Anzahl von wenigstens einem Trainingsdatensatz vorgegeben, so dass auf Basis der Trainingsdatensätze und durch Minimieren einer Kostenfunktion eine Anzahl Gewichtungsparameter inklusive eine Anzahl von Prototypen des tiefen neuronale Netzes angepasst wird.

Dem tiefen neuronalen Netz wird in jedem Validierungsschritt eine Sequenz aus einer Anzahl vorbestimmter Validierungsdatensätze vorgegeben, wobei für jeden Validierungsdatensatz ein korrespondierender latenter Repräsentationsdatensatz durch das tiefe neuronale Netz, beispielsweise durch eine Anzahl von Merkmalsextrationsebenen des tiefen neuronalen Netzes, erzeugt wird, und wobei zu an notierten Daten jedes Validierungsdatensatzes relevante latente Repräsentationen ausgewählt und zu dem jeweiligen Validierungsdatensatz und zu einem aktuellen Validierungsschritt zugehörig gespeichert wird.

Die Trainingsdatensätze und die Validierungsdatensätze besitzen jeweils einen Bildeingangsdatensatz und einen zugeordneten Ausgangsdatensatz, mit dem zu erkennende Objekte vorgegeben werden. Ein erfindungsgemäßes Trainingsverfahren kann also als ein Verfahren des überwachten Lernens verstanden werden. Während die Trainingsdatensätze aus einem unbegrenzten Fundus an geeigneten Ein- und Ausgangsdatensätzen stammen können, wird für den Validierungsdatensatz ein abgeschlossener Satz von Ein- und zugehörigen Ausgangsdaten ausgewählt, der in jedem der Validierungsschritte des Trainings vorzugsweise vollständig abgearbeitet wird.

Nach einem zweiten sowie nach jedem nachfolgenden weiteren Trainingszyklus wird ein Abstand zwischen den zu einem jeweiligen Validierungsdatensatz gespeicherten relevanten latenten Repräsentationen des aktuellen Validierungsschritts und eines vorhergehenden Validierungsschritts ermittelt. Aus den nach einem jeweiligen Trainingszyklus ermittelten Abständen wird ein Abstandsmittelwert gebildet. Ein Training des tiefen neuronalen Netzes wird beendet, wenn festgestellt wird, dass eine Evaluierungsphase begonnen worden ist und sobald der gebildete Abstandsmittelwert einen Stabilitätsschwellwert erreicht oder unterschreitet.

Eine Idee hinter der vorliegenden Erfindung ist, dass sich die gelernten Gewichtungsparameter inklusive den gelernten Prototypen des tiefen neuronale Netzes mit einem voranschreitenden Trainingsfortschritt stabilisieren sollten, so dass eine fortwährende Anpassung aller Parameter nur noch in kleinen Schritten erfolgt. Durch die Gewichtungsparameter der Merkmalsextrationsebenen wird festgelegt, wie die latenten Repräsentationen für einen jeweiligen Bildeingangsdatensatz erzeugt werden. Somit kann durch die Veränderung der von dem Merkmalsextrationsebenen erzeugten relevanten latenten Repräsentationen für einen spezifischen Validierungsdatensatz auf eine Veränderung der Gewichtungsparameter geschlossen werden. Mit zunehmendem Trainingsfortschritt stabilisieren sich diese relevanten latenten Repräsentationen in einem Bereich des latenten Raumes. Das heißt, dass aus den Veränderungen der relevanten latenten Repräsentationen der jeweiligen Validierungsdatensätze zwischen zwei Trainingszyklen, die jeweils als ein Vektor im latenten Raum dargestellt werden, ein Maß für die Stabilisierung gewonnen werden kann. Erreichen bzw. unterschreiten die Abstandsmittelwerte den Stabilitätsschwellwert, so kann das Training des tiefen neuronalen Netzes als erfolgreich abgeschlossen werden.

Durch die Evaluierungsphase wird sichergestellt, dass das DNN ein Mindestlernzustand erreicht hat, der eine erste Bewertung der Stabilisierung der über die Trainingszeit bzw. über die Trainingszyklen gelernten Gewichtungsparameter inklusive der gelernten Prototypen ermöglicht.

Gemäß einer Weiterbildung des Verfahrens kann das tiefe neuronale Netz neu initialisiert werden, wenn festgestellt wird, dass eine Evaluierungsphase bereits begonnen wurde und wenn ferner festgestellt wird, dass der gebildete Abstandsmittelwert einen Abbruchschwellwert erreicht oder überschreitet.

Mit dem Erreichen bzw. Überschreiten des Abbruchschwellwertes nach begonnener Evaluierungsphase kann davon ausgegangen werden, dass über die vergangenen Trainingszyklen keine Stabilisierung der Gewichtungsparameter erreicht werden konnte. Eine Stabilisierung des Lernzustands durch weitere Trainingszyklen kann nicht mehr mit ausreichender Zuverlässigkeit erwartet werden.

Gemäß einer Weiterbildung des Verfahrens kann die Evaluierungsphase begonnen werden, sobald nach einem Trainingszyklus, festgestellt wird, dass eine Folge von gebildeten Abstandsmittelwerten vorhergehender Trainingszyklen einen Freischaltschwellwert erreicht oder unterschreitet.

Der Freischaltschwellwert definiert den Mindestlernzustand, den das tiefe neuronale Netz für eine nachfolgende Evaluierungsphase erreicht haben muss.

Durch die Evaluierungsphase wird sichergestellt, dass sich nach einer unbestimmten Anzahl von durchlaufenen ersten Trainingszyklen die Gewichtungsparameter inklusive der Prototypen ausgehend von einem Initialisierungszustand formieren.

### Kurze Beschreibung der Zeichnungsfiguren

Weitere Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Beschriebene und/oder bildlich dargestellte Merkmale bilden für sich oder in beliebiger, sinnvoller Kombination den Gegenstand, gegebenenfalls auch unabhängig von den Ansprüchen, und können insbesondere zusätzlich auch Gegenstand einer oder mehrerer separater Anmeldung/en sein. Gleiche, ähnliche und/oder funktionsgleiche Teile sind mit gleichen Bezugszeichen versehen. Dabei zeigen:
- Figur 1: zeigt ein Kraftfahrzeug mit einem System zur Umfelderfassung;
- Figur 2: zeigt eine Struktur eines tiefen neuronalen Netzes zur Objekterkennung;
- Figur 3: zeigt ein Flussdiagramm für ein Verfahren zum Trainieren des tiefen neuronalen Netzes;
- Figur 4: zeigt eine zeitliche Veränderung einer relevanten latenten Repräsentation;
- Figur 5: zeigt gebildete Abstandsmittelwerte a̅ im zeitlichen Verlauf.

### Beschreibung der Ausführungsarten

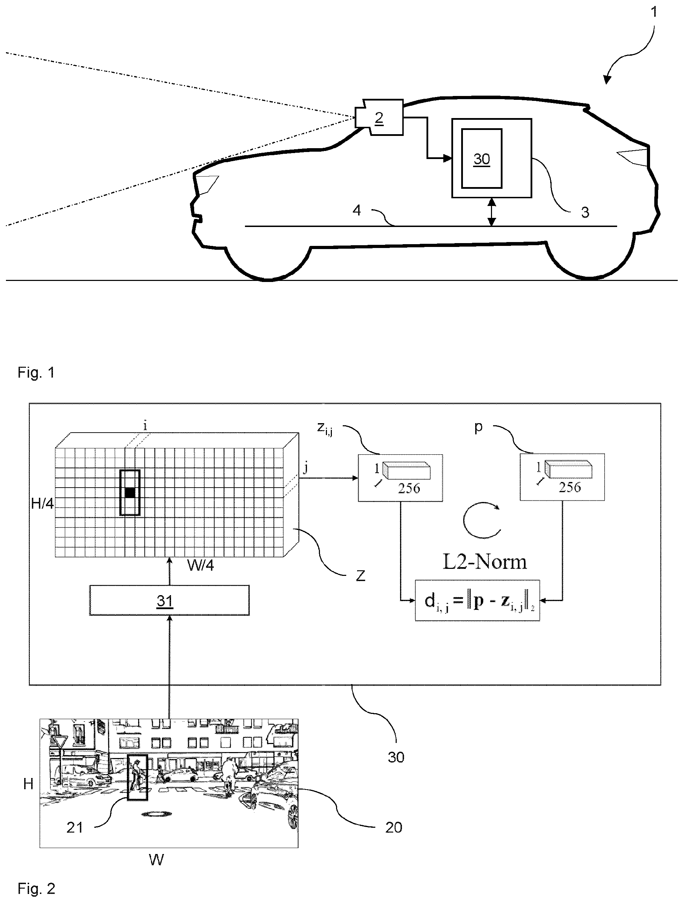

Die Figur 1 zeigt ein Kraftfahrzeug 1 mit einer Kamera 2 zur Umfelderfassung. Ein mittels der Kamera 2 erfasstes Bild der Umgebung wird als ein aktueller Bildeingangsdatensatz an ein Steuergerät 3 weitergeleitet. Das Steuergerät 3 besitzt ein Mikroprozessorsystem, in dem ein tiefes neuronales Netz (DNN) 30 beispielsweise in Form eines Softwaremoduls eingebettet ist. Das Steuergerät 3 besitzt eine Schnittstelle zu einem Kommunikationsnetzwerk 4, über die eine Objektliste mit klassifizierten und lokalisierten Objekten ausgegeben werden kann.

In der Figur 2 ist ein DNN 30 zur Objekterkennung in einem Bildeingangsdatensatz 20 schematisch dargestellt, dass beispielhaft auf eine Erkennung von Fußgängern trainiert werden soll. Während eines Trainings werden dem DNN 30 eine Vielzahl von Trainingsdatensätze vorgegeben, wobei jeder dieser Trainingsdatensätze jeweils einen Bildeingangsdatensatz 20 und einen zugehörigen Ausgangsdatensatz umfasst. Mit dem Ausgangsdatensatz werden Klassen und Positionen von zu erkennenden Objekten vorgegeben, die in einem Bild des entsprechenden Bildeingangsdatensatzes vorhanden sind. Das DNN 30 soll also mittels überwachten Lernens (engl. supervised learning) auf hervorgehobene Objekte in einem Bild trainiert werden. Während eines Trainings kann das DNN auf einem Trainingscomputersystem ausgeführt werden, so dass die Trainingsdatensätze mit entsprechenden Kamerabildern und mit hinzugefügten Klassen und Positionen der Objekte im jeweiligen Bild von einem Datenspeicher bereitgestellt und abgerufen werden können.

Der in der Figur 2 dargestellte Bildeingangsdatensatz 20 beschreibt ein Bild einer Fahrzeugumgebung, das beispielsweise mit der Kamera 2 des Kraftfahrzeug 1 aufgenommen worden sein kann. Der Bildeingangsdatensatz 20 besitzt eine Anzahl Bildpunkte (engl. pixel), die entsprechend der Höhe (engl. height) H und eine Breite (engl. width) W des Bildes in Zeilen und Spalten zueinander angeordnet sind. Jeder Bildpunkt des Bildeingangsdatensatz 20 wird durch einen Vektor im dreidimensionalen RBG-Farbraum beschrieben.

In dem Bild der aufgenommenen Fahrzeugumgebung ist ein Fußgänger zu sehen, auf den die Objekterkennung des DNN 30 trainiert werden soll. Dazu wird ein Bildbereich, der den Fußgänger enthält, mit einem kommentierten Begrenzungsrahmen 21 (engl. annotated bounding box) gekennzeichnet, der Position und Objektklasse definiert.

Das Ziel eines Trainings soll sein, dass das DNN 30 einen Bildmittelpunkt eines jeweiligen Fußgängers in einem beliebigen Bildeingangsdatensatz erkennen können soll. Insofern kann durch einen Ausgangsdatensatz, der dem Bildeingangsdatensatz 20 im Training zugeordnet ist, ein entsprechender Bildpunkt als Fußgängermittelpunkt vorgegeben werden.

Der Bildeingangsdatensatz 20 wird dem DNN 30 zur Verarbeitung zugeführt, wobei das DNN 30 eingangsseitig eine Anzahl von Merkmalsextrationsebenen 31 besitzt. Das DNN 30 kann zum Beispiel als ein faltendes neuronales Netzwerk (engl. convolutional neural network, CNN) ausgebildet sein, dessen Architektur in den Merkmalsextrationsebenen 31 spezielle Faltungs- und Bündelungsstrukturen vorsieht.

Mit den Merkmalsextrationsebenen 31 wird basierend auf dem Bildeingangsdatensatz 20 ein latenter Repräsentationsdatensatz Z erzeugt, wobei hinsichtlich der Anzahl von Daten eine Datenreduktion erzielt wird. So wird aus einem 2048 x 1024 Bildpunkte großen Bildeingangsdatensatz 20 ein latenter Repräsentationsdatensatz Z mit 512 x 256 latenten Repräsentationen erzeugt.

Während jeder Bildpunkt durch einen Vektor mit drei Farbwerten im RGB-Farbraum definiert wird, enthält eine jeweilige latente Repräsentation einen Vektor mit Merkmalen in einem 256-dimensionalen latenten Raum. Jede latente Repräsentation codiert in den 256 Merkmalen semantische Beziehungen zwischen Bildeingangsdaten eines rezeptiven Feldes (engl. receptive field), das in die jeweilige latente Repräsentation eingeflossen ist.

Durch den Ausgangsdatensatz wird eine latente Repräsentation z_{i,j} aus dem latenten Repräsentationsdatensatz Z ausgewählt, die mit dem Fußgängermittelpunkt gemäß dem Bildeingangsdatensatz 20 korrespondiert. Diese für einen Trainingsiterationsschritt ausgewählte latente Repräsentation z_{i,j} wird mit einem Prototypen p verglichen, der ebenfalls durch einen Vektor im latenten Raum beschrieben wird. Durch Minimieren einer Kostenfunktion wird in jedem Trainingsiterationsschritt eine Anzahl Gewichtungsparameter inklusive eine Anzahl von Prototypen des tiefen neuronalen Netzes angepasst, im Wesentlichen mit dem Ziel, dass eine Distanz d_{i,j} zwischen der ausgewählten latenten Repräsentation z_{i,j} und dem Prototypen p minimal wird.

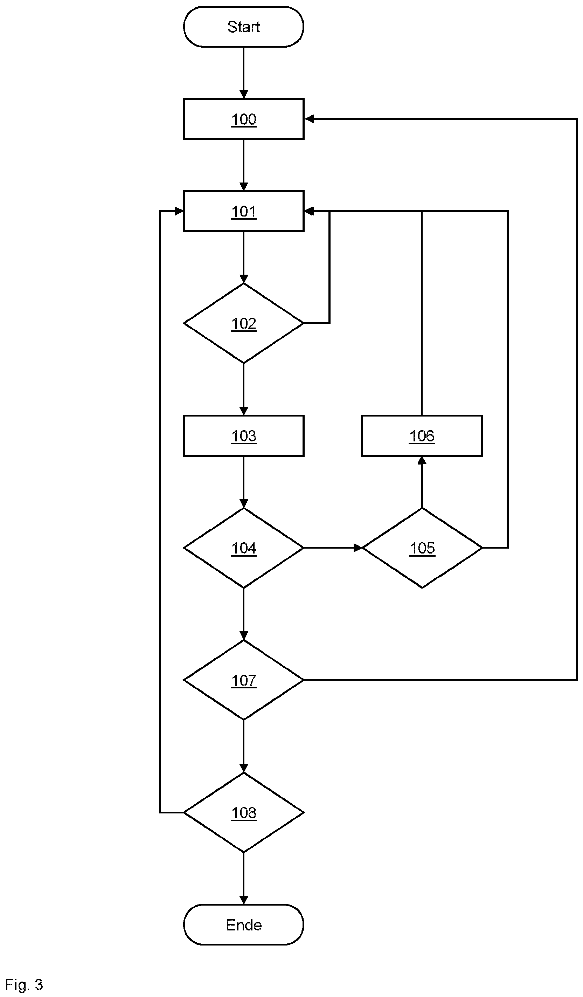

In der Figur 3 wird das erfindungsgemäße Verfahren zum Trainieren eines tiefen neuronalen Netzes (DNN) am Beispiel eines Flussdiagrammes erläutert. Zu Beginn durchläuft das zu trainierende DNN einen Initialisierungsschritt 100, in dem alle Gewichtungsparameter inklusive der Prototypen des DNN auf einen jeweiligen Anfangswert gesetzt werden. Anschließend wird ein Trainingszyklus 101 erstmalig durchlaufen.

Jeder Trainingszyklus 101 umfasst eine bestimmte Anzahl aufeinanderfolgender Trainingsiterationsschritte und einen darauffolgenden Validierungsschritt. Für die Trainingsiterationsschritte wird eine entsprechende Anzahl von Trainingsdatensätzen bereitgestellt, die jeweils einen Bildeingangsdatensatz sowie einen zugeordneten Ausgangsdatensatz umfassen. Auf Basis der Trainingsdatensätze und durch Minimieren einer Kostenfunktion passt das DNN seine Gewichtungsparameter und Prototypen an, die somit schrittweise erlernt werden. Für sämtliche Validierungsschritte eines Trainings wird eine Sequenz aus ausgewählten Validierungsdatensätzen vorgegeben, die jeweils einen Bildeingangsdatensatz sowie einen zugeordneten Ausgangsdatensatz umfassen. Zu jedem Bildeingangsdatensatz einer Sequenz erzeugen die Merkmalsextrationsebenen 31 des DNN einen korrespondierenden latenten Repräsentationsdatensatz Z. Mittels des entsprechend zugeordneten Ausgangsdatensatzes werden diejenigen latenten Repräsentationen ermittelt, die für einen jeweiligen Fußgängermittelpunkt relevant sind. Diese relevanten latenten Repräsentationen z_{k,l} jedes Validierungsdatensatzes werden in jedem Trainingszyklus als Datensatz abgespeichert.

Wurde der Trainingszyklus 101 erstmalig durchlaufen, wird nachfolgend in einem Prüfschritt 102 festgestellt, dass noch keine relevanten latenten Repräsentationen z_{k,l} aus dem Validierungsschritt eines vorhergehend durchlaufenen Trainingszyklus 101 gespeichert wurden. Der Trainingszyklus 101 wird somit zunächst ein weiteres Mal durchlaufen.

Nachdem der Trainingszyklus 101 zwei- oder mehrmalig durchlaufen wurde, wird in dem nachfolgenden ersten Prüfschritt 102 jeweils festgestellt, dass wenigstens ein Datensatz mit gespeicherten latenten Repräsentationen z_{k,l} wenigstens eines vorhergehend durchlaufenen Trainingszyklus 101 vorliegt. Daher wird anschließend in einem Berechnungsschritt 103 jede der gespeicherten relevanten latenten Repräsentationen z_{k,l} eines aktuell durchlaufenen Trainingszyklus 101 mit einer jeweiligen relevanten latenten Repräsentation z_{k,l} verglichen, die in einem jeweils unmittelbar vorhergehend durchlaufenen Trainingszyklus 101 zu dem identischen Validierungsdatensatz gespeichert wurde.

Aus den relevanten latenten Repräsentationen z_{k,l} eines jeweiligen aktuellen und eines unmittelbar vorhergehenden Trainingszyklus 101 wird in dem Berechnungsschritt 103 jeweils ein Abstand a_{k,l} bestimmt, der zu jedem Validierungsdatensatz eines durchlaufenen Trainingszyklus 101 gespeichert werden kann. Ferner wird aus den bestimmten Abständen a_{k,l} aller Validierungsdatensätze eines durchlaufenen Trainingszyklus 101 ein Abstandsmittelwert a̅ gebildet, der zu dem durchlaufenen Trainingszyklus 101 abgespeichert wird.

In dem zweiten Prüfschritt 104 wird geprüft, ob seit Durchlaufen des Initialisierungsschritts 100 eine Evaluierungsphase gestartet worden ist. Sofern festgestellt wurde, dass sich das Verfahren noch nicht in einer gestarteten Evaluierungsphase befindet, wird in dem dritten Prüfschritt 105 geprüft, ob die gespeicherten Abstandsmittelwerte a̅ innerhalb eines Betrachtungszeitraumes einen Freischaltschwellwert S1 unterschritten haben. Der Betrachtungszeitraum kann beispielsweise durch eine Folge mit einer vorgegebenen Anzahl von durchlaufenden Trainingszyklen definiert sein.

Wurde festgestellt, dass die entsprechenden Abstandsmittelwerte a̅ jeweils den Freischaltschwellwert S1 unterschritten haben, wird in dem Schritt 106 die Evaluierungsphase gestartet. Anschließend wird der Trainingszyklus 101 erneut durchlaufen. Sofern hingegen festgestellt wurde, dass die entsprechenden Abstandsmittelwerte a̅ vorausgegangener Trainingszyklen 101 den Freischaltschwellwert S1 noch nicht unterschritten haben, wird der Trainingszyklus 101 sofort erneut durchlaufen, wobei die Evaluierungsphase zu diesem Zeitpunkt noch nicht gestartet wird.

Wurde in dem zweiten Prüfschritt 104 hingegen festgestellt, dass die Evaluierungsphase bereits gestartet worden ist, wird in dem vierten Prüfschritt 107 geprüft, ob ein erstes oder ein zweites Abbruchkriterium für das Trainingsverfahren erfüllt ist. Für das erste Abbruchkriterium wird geprüft, ob ein im Berechnungsschritt 103 gebildete und abgespeicherte Abstandsmittelwert a̅ eines aktuell durchlaufenen Trainingszyklus 101 einen Abbruchschwellwert S2 überschreitet. Wird festgestellt, dass der Abbruchschwellwert überschritten wurde, ist das erste Abbruchkriterium erfüllt. Für das zweite Abbruchkriterium wird geprüft, ob eine maximale Anzahl von Trainingszyklen 101 seit letztmaligen Durchlaufens des Initialisierungsschritts 100 erreicht worden ist.

Ist wenigstens eines der beiden Abbruchkriterien erfüllt, wird ein erneuter Initialisierungsschritt 100 durchgeführt. Alle Gewichtungsparameter inklusive der Prototypen des DNN werden auf den jeweiligen Anfangswert zurückgesetzt. Die in den vorangegangenen Trainingszyklen 101 gelernten Parameter werden verworfen.

Wird in dem vierten Prüfschritt 107 hingegen festgestellt, dass weder das erste Abbruchkriterium, noch das zweite Abbruchkriterium erfüllt ist, wird in dem fünften Prüfschritt 108 geprüft, ob der im Berechnungsschritt 103 gebildete Abstandsmittelwert a̅ des aktuell durchlaufenen Trainingszyklus 101 einen Stabilitätsschwellwert S3 unterschreitet. Wird der Stabilitätsschwellwert S3 unterschritten, wird das Verfahren zum Trainieren des DNN erfolgreich abgeschlossen. Unterschreitet der aktuell gebildete Abstandsmittelwert den Stabilitätsschwellwert nicht, so wird der Trainingszyklus 101 erneut durchlaufen.

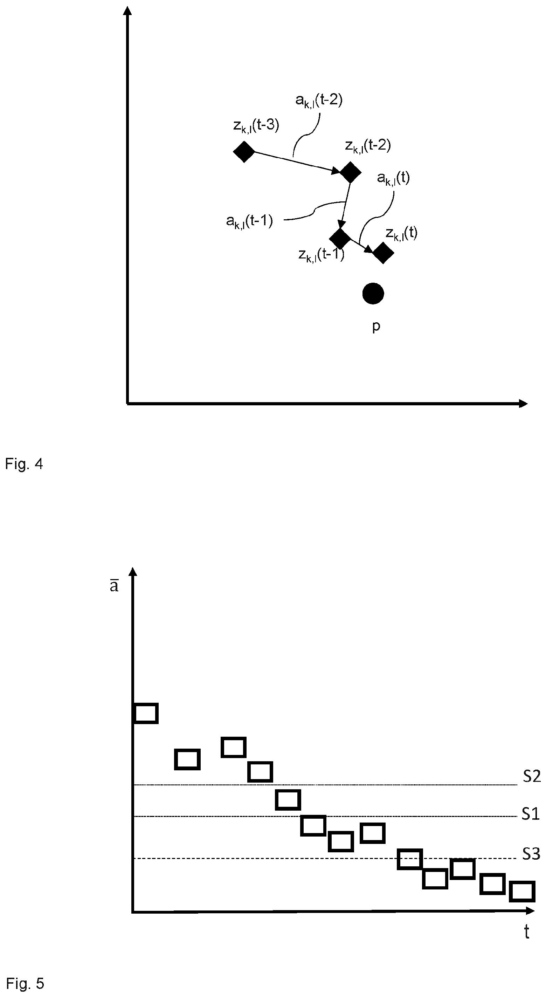

Die Figur 4 zeigt beispielhaft die zeitliche Veränderung einer relevanten latenten Repräsentation z_{k,l} eines Validierungsdatensatzes über eine Anzahl nacheinander durchlaufenden Trainingszyklen, die in einer zweidimensionalen Ebene eines latenten Raumes dargestellt sind. Es ist zu erkennen, dass die Abstände a_{k,l} zwischen den relevanten latenten Repräsentationen z_{k,l} zweier zeitlich aufeinanderfolgend durchlaufenen Trainingszyklen 101 mit zunehmenden Trainingsfortschritt kleiner werden. Ferner nähern sich die relevanten latenten Repräsentationen z_{k,l} mit zunehmendem Trainingsfortschritt den Prototypen p an.

In der Figur 5 ist der Trainingsfortschritt im zeitlichen Verlauf dargestellt. Die nach jedem durchlaufenen Trainingszyklus 101 gebildeten Abstandsmittelwerte a̅ sind über die zeitliche Abfolge der aufeinanderfolgenden Trainingszyklen dargestellt.

Da sich die gelernten Gewichtungsparameter inklusive der gelernten Prototypen des DNN bei einem erfolgreichen Training mit zunehmendem Trainingsfortschritt stabilisieren sollen, wird gemäß einer Erfindungsidee erwartet, dass die gebildeten Abstandsmittelwerte a̅ im Trainingsverlauf kleiner werden. Die Folge der gebildeten Abstandsmittelwerte a̅ ist jedoch auch bei einem erfolgreichen Trainingsverlauf in der Regel nicht monoton fallend, so dass im zeitlichen Verlauf eines Trainings der Abstandsmittelwert a̅ lokal wieder ansteigen kann. Insbesondere sind zu Beginn eines Trainings die Gewichtungsparameter des DNN inklusive der Prototypen noch relativ instabil, so dass die aus den Validierungsdatensätzen resultierenden relevanten latenten Repräsentationen z_{k,l} von Trainingszyklus zu Trainingszyklus stark variieren können. Somit können auch die Abstände a_{k,l} und Abstandsmittelwert a̅ zu Trainingsbeginn relativ stark schwanken. Das erfindungsgemäße Verfahren zum Trainieren eines DNN wird daher im Wesentlichen mittels drei Schwellwerten gesteuert. Erst wenn der Abstandsmittelwert a̅ den Freischaltschwellwert S1 in Folge mit einer bestimmten Anzahl unterschritten hat, wird die Evaluierungsphase des Verfahrens begonnen. Somit wird sichergestellt, dass die Gewichtungsparameter des zu trainierenden DNN ein Mindeststabilitätsniveau erreicht haben, so dass mit weiterem Trainingsfortschritt ein Trainingserfolg evaluiert werden kann.

Sollten im weiteren Verlauf der Evaluierungsphase die gebildeten Abstandsmittelwert a̅ wieder ansteigen und den Abbruchschwellwert S2 überschreiten, werden die gewonnenen Trainingsdaten verworfen, da sich die Gewichtungsparameter und Prototypen des DNN offensichtlich nicht stabilisieren. Wird während der Evaluierungsphase der Stabilitätsschwellwert S3 unterschritten, kann das Training des DNN hingegen erfolgreich beendet werden.

### Liste der Bezugszeichen

- 1: Kraftfahrzeug
- 2: Kamera
- 3: Steuergerät
- 4: Kommunikationsnetzwerk
- 30: tiefes neuronales Netz (DNN)
- 31: Merkmalsextrationsebenen
- Z: latenten Repräsentationsdatensatz
- z_{i,j}: latente Repräsentation
- z_{k,l}: relevante latente Repräsentation
- d_{i,j}: Distanz
- a_{k,l}: Abstand
- p: Prototyp
- a̅: Abstandsmittelwert
- S1: Freischaltschwellwert
- S2: Abbruchschwellwert
- S3: Stabilitätsschwellwert
- 100: Initialisierungsschritt
- 101: Trainingszyklus
- 102: erster Prüfschritt
- 103: Berechnungsschritt
- 104: zweiter Prüfschritt
- 105: dritter Prüfschritt
- 106: Schritt
- 107: vierter Prüfschritt
- 108: fünfter Prüfschritt

## Patentansprüche

1. Computerimplementiertes Verfahren zum Trainieren eines tiefen neuronalen Netzes (30) auf eine Objekterkennung im Umfeld eines Kraftfahrzeuges (1), wobei das tiefe neuronale Netz (30) eine Anzahl von Merkmalsextrationsebenen (31) und eine Anzahl von Perzeptionsebenen besitzt, wobei die Merkmalsextrationsebenen ausgebildet sind, für einen Bildeingangsdatensatz (20) jeweils einen latenten Repräsentationsdatensatz (Z) zu erzeugen und an die Perzeptionsebenen weiterzugeben und wobei die Perzeptionsebenen ausgebildet sind, latente Repräsentationen (z_{i,j}, z_{k,l}) mit einer Anzahl von gelernten Prototypen (p) auf Ähnlichkeit hin zu vergleichen und ein Objekt in dem Bildeingangsdatensatz (20) basierend auf einer festgestellten Ähnlichkeit hin zu erkennen sowie zu lokalisieren und zu klassifizieren,
wobei das tiefe neuronale Netz (30) initialisiert und anschließend mit einer Anzahl von Trainingszyklen trainiert (101) wird, wobei mit jedem Trainingszyklus eine Anzahl aufeinanderfolgender Trainingsiterationsschritte und ein inkludierter darauffolgender Validierungsschritt durchlaufen wird,
wobei dem tiefen neuronalen Netz (30) in jedem Trainingsiterationsschritt eine Anzahl von wenigstens einem Trainingsdatensatz vorgegeben wird, so dass auf Basis der Trainingsdatensätze und durch Minimieren einer Kostenfunktion eine Anzahl Gewichtungsparameter inklusive einer Anzahl von Prototypen (p) des tiefen neuronalen Netzes (30) angepasst wird, und
wobei dem tiefen neuronalen Netz (30) in jedem Validierungsschritt eine Sequenz aus einer Anzahl vorbestimmter Validierungsdatensätze vorgegeben wird, wobei die Trainingsdatensätze und die Validierungsdatensätze jeweils einen Bildeingangsdatensatz und einen zugeordneten Ausgangsdatensatz umfassen, wobei mit dem Ausgangsdatensatz Klassen und Positionen von zu erkennenden Objekten vorgegeben werden, die in einem Bild des entsprechenden Bildeingangsdatensatzes vorhanden sind, wobei für jeden Validierungsdatensatz durch das tiefe neuronale Netz (30) ein korrespondierender latenter Repräsentationsdatensatz (Z) erzeugt wird, und wobei zu den Klassen und Positionen der zu erkennenden Objekten jedes Validierungsdatensatzes relevante latente Repräsentationen (z_{k,l}) ausgewählt und zu dem jeweiligen Validierungsdatensatz und zu einem aktuellen Validierungsschritt zugehörig gespeichert wird, und
wobei nach einem zweiten sowie nach jedem nachfolgenden weiteren Trainingszyklus (101) ein Abstand (a_{k,l}) zwischen den zu einem jeweiligen Validierungsdatensatz gespeicherten relevanten latenten Repräsentationen (z_{k,l}) des aktuellen Validierungsschritts und eines vorhergehenden Validierungsschritts ermittelt wird, und
wobei aus den nach einem jeweiligen Trainingszyklus (101) ermittelten Abständen ein Abstandsmittelwert (a̅) gebildet wird, und
wobei ein Training des tiefen neuronalen Netz (30) beendet wird, wenn festgestellt (104) wird, dass eine Evaluierungsphase begonnen worden ist und sobald festgestellt wurde (108), dass der gebildete Abstandsmittelwert (a̅) einen Stabilitätsschwellwert (S3) erreicht oder unterschreitet.

2. Verfahren gemäß vorstehendem Anspruch 1, wobei das tiefe neuronale Netz (30) neu initialisiert (100) wird, wenn festgestellt (104) wird, dass eine Evaluierungsphase bereits begonnen wurde und wenn ferner festgestellt (107) wird, dass der gebildete Abstandsmittelwert (a̅) einen Abbruchschwellwert (S2) erreicht oder überschreitet.

3. Verfahren gemäß einem der beiden vorstehenden Ansprüche 1 oder 2, wobei die Evaluierungsphase begonnen (106) wird, sobald nach einem Trainingszyklus (101), festgestellt (105) wird, dass eine Folge von gebildeten Abstandsmittelwerten (a̅) vorhergehender Trainingszyklen (101) einen Freischaltschwellwert (S1) erreicht oder unterschreitet.

4. Computersystem zum Trainieren eines tiefen neuronalen Netz (30), mit einer Recheneinheit, auf der ein zu trainierendes tiefes neuronales Netz (30) zusammen mit einem Trainingsprogramm eingebettet ist, wobei das Trainingsprogramm ausgebildet ist die Recheneinheit im Betrieb anzuleiten, ein Verfahren gemäß einem der Ansprüche 1 bis 3 auszuführen.

## Claims

1. A computer-implemented method for training a deep neural network (30) for object recognition in the vicinity of a motor vehicle (1), wherein the deep neural network (30) has a number of feature extraction levels (31) and a number of perception levels, wherein the feature extraction levels are designed to generate a latent representation data set (Z) for an image input data set (20) in each case and to pass it on to the perception levels, and wherein the perception levels are designed to compare latent representations (z_{i,j}, _{zk,l}) with a number of learned prototypes (p) for similarity and to recognise an object in the image input data set (20) based on a determined similarity localise and classify,
wherein the deep neural network (30) is initialised and subsequently trained (101) with a number of training cycles, wherein with each training cycle a number of successive training iteration steps and an included subsequent validation step is passed,
wherein the deep neural network (30) in each training iteration step a number of at least one training data set is predetermined, so that on the basis of the training data sets and by minimising a cost function a number of weighting parameters including a number of prototypes (p) of the deep neural network (30) is adapted, and
wherein a sequence of a number of predetermined validation data sets is predetermined for the deep neural network (30) in each validation step, wherein the training data sets and the validation data sets each comprise an image input data set and an associated output data set, wherein classes and positions of objects to be recognised which are present in an image of the corresponding image input data set are predetermined with the output data set, wherein a corresponding latent representation data set (Z) is generated for each validation data set by the deep neural network (30), and wherein latent representations (_{zk}, ₗ) relevant to the classes and positions of the objects to be recognised of each validation data set are selected and stored as belonging to the respective validation data set and to a current validation step, and
wherein a distance (_{ak,l}) between the relevant latent representations (_{zk,l}) of the current validation step and of a preceding validation step is determined after a second training cycle and after each subsequent further training cycle (101), and a distance average value (a̅) is formed from the distances determined after a respective training cycle (101), and
whereby a training of the deep neural network (30) is terminated when it is determined (104) that an evaluation phase has been started and as soon as it has been determined (108) that the distance mean value (a̅) formed reaches or falls below a stability threshold value (S3).

2. A method according to the preceding claim 1, wherein the deep neural network (30) is reinitialised (100) when it is determined (104) that an evaluation phase has already been started and when it is further determined (107) that the distance mean value (a̅) formed reaches or exceeds a termination threshold value (S2).

3. Method according to one of the two preceding claims 1 or 2, wherein the evaluation phase is started (106) as soon as it is determined (105), after a training cycle (101), that a sequence of formed distance mean values (a̅) of preceding training cycles (101) reaches or falls below an enabling threshold value (S1).

4. Computer system for training a deep neural network (30), with a computing unit, on which a deep neural network to be trained (30) together with a training programme is embedded, wherein the training programme is designed to instruct the computing unit in operation to carry out a method according to any one of claims 1 to 3.

## Revendications

1. Procédé mis en œuvre par ordinateur pour entraîner un réseau neuronal profond (30) à une détection d'objet dans l'environnement d'un véhicule automobile (1), dans lequel le réseau neuronal profond (30) possède un certain nombre de plans d'extraction de caractéristiques (31) et un certain nombre de plans de perception, les plans d'extraction de caractéristiques étant conçus pour générer un ensemble de données de représentation latente (Z) pour un ensemble de données d'entrée d'image (20) et pour le transmettre aux plans de perception et dans lequel les plans de perception sont conçus pour des représentations latentes comparer (z_{i,j}, _{zk,l}) avec un certain nombre de prototypes (p) appris en termes de similitude et reconnaître, localiser et classer un objet dans l'ensemble de données d'entrée d'image (20) sur la base d'une similitude détectée,
où le réseau neuronal profond (30) est initialisé et ensuite entraîné (101) avec un certain nombre de cycles d'entraînement, chaque cycle d'entraînement étant suivi d'un certain nombre d'étapes successives d'itération d'entraînement et d'une étape de validation ultérieure incluse,
un nombre d'au moins un ensemble de données d'apprentissage est prédéfini au réseau neuronal profond (30) dans chaque étape d'itération d'apprentissage, de sorte que, sur la base des ensembles de données d'apprentissage et en minimisant une fonction de coût, un nombre de paramètres de pondération comprenant un nombre de prototypes (p) du réseau neuronal profond (30) est ajusté, et
dans laquelle, à chaque étape de validation, le réseau neuronal profond (30) est prédéfini d'une séquence d'un certain nombre d'enregistrements de données de validation prédéterminés, les enregistrements d'apprentissage et les enregistrements de données de validation comprenant chacun un enregistrement d'entrée d'image et un enregistrement de sortie associé, l'enregistrement de sortie étant prédéfini de classes et de positions d'objets à reconnaître présents dans une image de l'enregistrement d'entrée d'image correspondant, pour chaque enregistrement de validation à travers le réseau neuronal profond (30) correspondant à l'un des éléments latents des représentations latentes pertinentes (_{zk,l}) sont sélectionnées parmi les classes et positions des objets à reconnaître de chaque ensemble de données de validation et sont stockées en relation avec l'ensemble de données de validation respectif et avec une étape de validation en cours ; et
une distance (_{ak,l}) entre les représentations latentes pertinentes (_{zk,l}) de l'étape de validation en cours et d'une étape de validation précédente mémorisées pour un ensemble de données de validation respectif est déterminée après un deuxième cycle d'entraînement (101) et après chaque cycle d'entraînement ultérieur, et une valeur moyenne de distance (a̅) est formée à partir des distances déterminées après un cycle d'entraînement respectif (101), et
un entraînement du réseau neuronal profond (30) est terminé lorsqu'il est déterminé (104) qu'une phase d'évaluation a commencé et lorsqu'il est déterminé (108) que la valeur moyenne de distance (a̅) formée atteint ou passe en-dessous d'une valeur seuil de stabilité (S3).

2. Procédé selon la revendication 1, dans lequel le réseau neuronal profond (30) est réinitialisé (100) lorsqu'il est déterminé (104) qu'une phase d'évaluation a déjà commencé et lorsqu'il est déterminé (107) en outre que la valeur moyenne de distance (a̅) formée atteint ou dépasse un seuil d'arrêt (S2).

3. Procédé selon l'une des deux revendications précédentes 1 ou 2, dans lequel la phase d'évaluation est commencée (106) dès qu'après un cycle d'entraînement (101), il est déterminé (105) qu'une séquence de valeurs moyennes de distance (a̅) formées de cycles d'entraînement antérieurs (101) atteint ou passe en-dessous d'une valeur de seuil de déverrouillage (S1).

4. Système d'ordinateur pour entraîner un réseau neuronal profond (30), comprenant une unité de calcul sur laquelle est incorporé un réseau neuronal profond (30) à entraîner en même temps qu'un programme d'entraînement, le programme d'entraînement étant conçu pour guider l'unité de calcul, en fonctionnement, pour exécuter un procédé selon l'une quelconque des revendications 1 à 3.
